# EUROPÄISCHE PATENTSCHRIFT

(11) **EP 1 125 675 B1**
(45) Veröffentlichungstag und Bekanntmachung des Hinweises auf die Patenterteilung: **21.11.2007**
(21) Anmeldenummer: 01103325.5
(22) Anmeldetag: 13.02.2001
(51) Int. Cl.: B23K 37/053, B23K 9/32

(54) **Vorrichtung zur Gasbeflutung von zwei miteinander zu verschweissenden Rohren**
Device for flooding two pipes to be welded with gas
Dispositif pour remplir de gaz de deux tubes à souder

(30) Priorität: 14.02.2000 DE 10006581
(43) Veröffentlichungstag der Anmeldung: 22.08.2001
(73) Patentinhaber: K.B. Schweissmaschinen Vermietung und Vertrieb GmbH, 31634 Steimbke (DE)
(72) Erfinder: Freye, Christian, 49084 Osnabrück (DE); Freye, Josef Franz, 28277 Bremen (DE)
(74) Vertreter: Jabbusch, Wolfgang

(56) Entgegenhaltungen:
- EP-A- 0 116 687
- EP-A- 0 193 812
- DE-A- 4 017 886
- DE-U- 9 204 498
- FR-A- 1 346 330

## Beschreibung

Die Erfindung betrifft eine Vorrichtung zur Gasbeflutung von zwei miteinander zu verschweißenden Rohren mit einem in den Rohren anordbaren Körper mit wenigstens einer Austrittsöffnung für das Gas, an dem zumindestens eine Gaszuführung anschließbar ist und der einen Beflutungsraum begrenzende Dichtungselemente aufweist, wobei der Körper von den Dichtungselementen separate Abstützeinrichtungen zu seinem Abstützen an den Innenseiten der Rohre aufweist, jede Abstützeinrichtung zumindestens ein an die Innenseite des Rohres anlegbares Anlageelement aufweist, das mit einem Halteelement an dem Körper gehalten ist, wobei mit dem Halteelement der Abstand zwischen dem Anlageelement und dem Körper veränderbar ist.

Bei der Herstellung von hochwertigen Rohrschweißverbindungen, insbesondere an niedrig- und hochlegierten Stählen, wird Schutzgas verwendet, um das Oxidieren der Schweißnähte und der Wärmeeinflußzone im Rohrinneren zu verhindern. Es wurden bereits gattungsgemäße Vorrichtungen vorgeschlagen, mit denen Schutzgas in das Innere der Rohre eingeleitet wird. Die Vorrichtungen weisen einen Körper mit wenigstens einer Austrittsöffnung für das Gas auf, der im Bereich der Rohrenden der beiden miteinander zu verschweißenden Rohre anordbar ist. Der Körper weist weiterhin vorzugsweise zwei Dichtungselemente auf, die beispielsweise als kreisförmige Dichtscheiben ausgebildet sind. Mit diesen Dichtscheiben wird ein begrenzter Beflutungsraum ausgebildet, der die Stoßstelle beider Rohrenden und angrenzende Bereiche umfaßt. Durch den begrenzten Beflutungsraum ist verhindert, daß ein zu hoher Gasverbrauch auftritt, denn das Gas kann nicht in die von der Stoßstelle weiter entfernten Abschnitte der Rohre gelangen.

Eine Vorrichtung der eingangs genannten Gattung ist aus der DE-GM 83 00 322.3 bekannt. Als Dichtungselemente dienen bei dieser Vorrichtung Streifenbürsten, die mit ihren freien Enden gegen die Innenwände der Rohre geführt sind. Die Streifenbürsten haben neben dieser dichtenden Funktion weiterhin die Funktion, die beiden miteinander zu verschweißenden Rohre in einer zueinander koaxialen Lage zu zentrieren. Aufgrund dieser Doppelfunktion der Streifenbürsten ist auf nachteilige Weise nicht gewährleistet, daß die voneinander verschiedenen Funktionen Abdichten und Zentrieren optimal ausgeführt sind. Die Streifenbürsten sind elastisch auszubilden, um eine möglichst gute Dichtungswirkung zu erzielen. Durch diese elastische Ausbildung können sie jedoch größere Kräfte nicht auf die Innenseiten der Rohre übertragen, um beide Rohre zueinander exakt koaxial zu zentrieren.

Auch die DE-GM 92 04 498.0 zeigt eine Vorrichtung zur Gasbeflutung nach vorbezeichneter Gattung. Bei der bekannten Vorrichtung sind Abstützeinrichtungen als Stößel ausgebildet. Die Stößel sind dabei in einer komplizierten Vorrichtung aufgenommen, welche Stößelführungen umfaßt. Weiterhin ist ein Kolben vorgesehen, der pneumatisch oder hydraulisch in axialer Richtung verschiebbar ist. Mit diesem Kolben werden Keilflächen bewegt, welche mit den Stößeln in diese bewegender Wirkverbindung stehen. Aufgrund des Vorhandenseins eines hydraulischen oder pneumatischen Antriebes ist nach diesem Stand der Technik eine maschinelle Vorrichtung mit einem entsprechend aufwendigen Bedienvorgang gegeben.

Der Erfindung liegt die Aufgabe zugrunde, eine Vorrichtung der eingangs genannten Gattung aufzuzeigen, mit der bei einfachster Bedienung sowohl eine optimale Abdichtung des Beflutungsraumes als auch eine optimale Zentrierung der miteinander zu verschweißenden Rohre zueinander gewährleistet ist.

Diese Aufgabe ist erfindungsgemäß dadurch gelöst, daß jede Abstützeinrichtung durch einen Spreizkörper ausgebildet ist, wobei ein Spannkörper das Anlageelement ausbildet und wobei Spreize das Halteelement ausbilden und daß der Körper als Tragrohr ausgebildet ist, dessen Durchmesser geringer als der Innendurchmesser der miteinander zu verschweißenden Rohre ist und dessen wenigstens einem Ende ein Anschlußelement für die Gaszuführung zugeordnet ist, und daß auf dem Außenumfang des Tragrohres die Spreizkörper und die Dichtungselemente angeordnet sind, daß die Spreizkörper in zwei Gruppen eingeteilt sind, wobei die Spreizkörper ein und derselben Gruppe über den Umfang des Körpers verteilt angeordnet sind und wobei die Spreizkörper gleich dimensioniert sind, daß zwischen den beiden Gruppen der Spreizkörper ein Verschiebestück auf dem Tragrohr angeordnet ist, diesem Verschiebestück zumindest abschnittsweise aus porösem Material gefertigt ist und die wenigstens eine Austrittsöffnung für das Gas in dem diesem Verschiebestück zugeordneten Bereich des Tragrohres angeordnet ist, wobei an einem freien Ende des Tragrohres ein erstes Dichtungselement befestigt ist, gegen dieses Dichtungselement die Spreizkörper haltend angelegt sind und auf der diesem Dichtungselement abgekehrten Seite der Spreizkörper auf dem Tragrohr eine Verschiebehülse angeordnet ist und wobei das Verschiebestück durch ein Betätigen der Verschiebehülse auf dem Tragrohr verschiebbar ist.

Bei der erfindungsgemäßen Vorrichtung werden die Dichtungselemente nicht gleichzeitig als Abstützelemente zur Zentrierung der Rohre eingesetzt. Vielmehr sind separate Abstützeinrichtungen vorgesehen.

Aufgrund des Vorhandenseins getrennter Bauteile für die Abdichtung des Beflutungsraumes und für die Zentrierung der Rohre in eine zueinander koaxiale Ausrichtung, können sowohl das Abdichten als auch das Zentrieren optimal ausgeführt werden. So sind die Dichtungselemente allein auf ihre Dichtungsfunktion hin optimierbar. In entsprechender Weise können allein auf die Zentrierfunktion optimal abgestimmte Abstützeinrichtungen vorgesehen sein.

Für die Abstützeinrichtungen ist dazu vorgesehen, daß jede Abstützeinrichtung zumindestens ein an die Innenseite des Rohres anlegbares Anlageelement aufweist, das mit einem Halteelement an dem Körper gehalten ist, wobei mit dem Halteelement der Abstand zwischen dem Anlageelement und dem Körper veränderbar ist. Mit dem Halteelement wird das Anlageelement an dem Körper gehalten und ist das Anlageelement zugleich gegen die Innenseite eines Rohres führbar. Aufgrund dieser Führung ist der Abstand zwischen dem Anlageelement und dem Körper veränderbar, woraus in vorteilhafter Weise folgt, daß die Abstützeinrichtungen der erfindungsgemäßen Vorrichtung für miteinander zu verschweißende Rohre mit verschiedenen Innendurchmessern einsetzbar ist.

Jede Abstützeinrichtung ist durch einen Spreizkörper ausgebildet, wobei ein Spannkörper das Anlageelement ausbildet und wobei Spreize das Halteelement ausbilden. Der Spannkörper des Spreizkörpers ist beispielsweise ein Anlageprofil, das an die Innenseite des Rohres anlegbar ist. Das Anlegen erfolgt vorzugsweise großflächig mit der Längsseite des Profils.

Der Spannkörper wird durch Spreize gehalten, die ihrerseits am Körper angelenkt sind. Die Spreize bilden ein scherenartiges Gerüst aus und ermöglichen in bekannter Weise eine Veränderbarkeit des Abstandes zwischen Spannkörper und Körper durch eine Änderung der Winkelstellung ihrer Spreize zueinander.

Der Körper ist als Tragrohr ausgebildet, dessen Durchmesser geringer als der Innendurchmesser der miteinander zu verschweißenden Rohre ist und dessen wenigstens einem Ende ein Anschlußelement für die Gaszuführung zugeordnet ist, wobei auf dem Außenumfang des Tragrohres die Spreizkörper und die Dichtungselemente angeordnet sind. Aufgrund des geringeren Durchmessers des Tragrohres als der Innendurchmesser der zu verschweißenden Rohre kann dieses Tragrohr innerhalb der Rohre angeordnet sein. Das Tragrohr trägt die Spreizkörper sowie die Dichtungselemente. Diese sind dabei derart dimensioniert, daß sie einen Abschnitt innerhalb der Rohre begrenzen und somit den Beflutungsraum ausbilden. Die Spreize werden in einer Weise eingestellt, daß die von ihnen getragenen Spannkörper gegen die Innenseiten der Rohre geführt werden und somit zunächst den Körper innerhalb der Rohre festlegen und anschließend beide Rohre zentrieren.

Das Tragrohr kann aus mehreren Rohrabschnitten ausgebildet sein. Insbesondere durch ein Zusammenstecken ist ermöglicht, daß ein Tragrohr mit einer größeren Länge gebildet wird. Es können jeweils etwa 1,5 m lange und somit problemlos transportierbare Rohrabschnitte vorgesehen sein, die zu einem Gesamt-Tragrohr zusammensteckbar sind. Dieses kann eine Länge von beispielsweise bis zu 12 m aufweisen.

Zur Anordnung der Spreizkörper auf dem Tragrohr ist erfindungsgemäß vorgesehen, daß an einem Ende des Tragrohres ein erstes Dichtungselement befestigt ist, daß gegen dieses Dichtungselement die Spreizkörper haltend angelegt sind und daß auf der diesem Dichtungselement abgekehrten Seite der Spreizkörper auf dem Tragrohr eine Verschiebehülse angeordnet ist, und wobei das Verschiebestück durch ein Betätigen der Verschiebehülse auf dem Tragrohr verschiebbar ist. Die Verschiebehülse kann entlang der Längsmittelachse des Tragrohres auf dem Tragrohr verschoben werden. Dadurch ist der Abstand zwischen ihr und dem an einem Ende des Tragrohres befestigten Dichtungselement veränderbar. Das Dichtungselement bildet dabei für die gegen dieses Dichtungselement haltend angelegten Spreizkörper ein Widerlager aus. Wird die Verschiebehülse in Richtung dieses Widerlagers verschoben, tritt eine Veränderung der Spreizkörper in der Weise ein, daß die von den Spreizen gehaltenen Spannkörper von dem Tragrohr entfernt werden und gegen die Innenseiten der Rohre geführt werden. Bei einem entgegengesetzten Verschieben der Verschiebehülse werden die Spreizkörper derart verändert, daß die Spannkörper nach dem Verschieben einen geringeren Abstand zum Tragrohr aufweisen. Mit der Verschiebehülse ist somit eine Einstellung der Spreizkörper und dadurch eine Anpassung der erfindungsgemäßen Vorrichtung an verschiedene Innendurchmesser der miteinander zu verschweißenden Rohre möglich.

Die Verschiebehülse kann beispielsweise ein Innengewinde aufweisen und das Tragrohr kann in dem der Verschiebehülse zugeordneten Bereich ein Außengewinde aufweisen, so daß die Verschiebehülse auf dem Tragrohr durch Schrauben verschiebbar ist. Die Verschiebehülse kann dabei vorzugsweise auch ein Außengewinde aufweisen. Weiterhin kann auf der Verschiebehülse ein zweites Dichtungselement angeordnet sein, so daß die Spreizkörper innerhalb des von den Dichtungselementen begrenzten Beflutungsraumes für das Schutzgas angeordnet sind.

Die Spreizkörper sind in zwei Gruppen eingeteilt sein, wobei die Spreizkörper ein und derselben Gruppe über den Umfang des Tragrohres verteilt angeordnet sind und wobei die Spreizkörper gleich dimensioniert sind. Die erfindungsgemäße Vorrichtung wird während des Verschweißens der Enden zweier Rohre eingesetzt. Es ist daher zweckmäßig, jedem der beiden miteinander zu verschweißenden Rohre eine Gruppe von Spreizkörpern zuzuordnen. Die beiden Gruppen von Spreizkörpern sind nebeneinander auf dem Tragrohr angeordnet, wobei die Spreizkörper in jeder Gruppe vorzugsweise gleichmäßig über den Umfang des Tragrohres verteilt angeordnet sind. Beispielsweise sind jeweils drei Spreizkörper vorgesehen, die unter dem jeweiligen Einschließen eines Winkels von etwa 120° über den Umfang des Tragrohres verteilt angeordnet sind.

Aus der gleichen Dimensionierung der Spreizkörper folgt, daß bei einem Verschieben der Verschiebehülse in Richtung des auf dem Tragrohr festgelegten Dichtungselementes bei jedem Spreizkörper eine gleiche Veränderung eintritt. Die Spreize verändern ihre Winkelstellung zueinander jeweils in gleicher Weise, so daß die von den Spreizen gehaltenen Spannkörper bei jedem Spreizkörper in gleichem Maße vom Tragrohr entfernt werden. Dadurch ist vorteilhaft ermöglicht, daß die beiden miteinander zu verschweißenden Rohre in gleicher Weise auf die Längsmittelachse des Tragrohres zentriert werden. Da das Tragrohr über beide Enden der Rohre hinweggeführt ist, erfolgt dadurch vorteilhaft eine exakte koaxiale Zentrierung der beiden Rohre.

Dabei ist vorgesehen, daß zwischen den Gruppen der Spreizkörper ein Verschiebestück auf dem Tragrohr angeordnet ist, daß dieses Verschiebestück zumindestens abschnittsweise aus porösem Material gefertigt ist und daß die wenigstens eine Austrittsöffnung für das Gas in dem diesem Verschiebestück zugeordneten Bereich des Tragrohres angeordnet ist. Das Schutzgas kann aus dem Tragrohr durch die Austrittsöffnung in das Verschiebestück eintreten. Dieses ist dafür als Hohlkörper ausgebildet, beispielsweise als auf dem Tragrohr verschiebbarer Ring mit kreisrundem Querschnitt. Das Verschiebestück ist abschnittsweise oder insgesamt aus einem porösem Material, so daß das Schutzgas aus dem Verschiebestück in den Beflutungsraum austreten kann.

Der Ring kann aus zwei Halbschalen ausgebildet sein, die aus voneinander verschiedenen Richtungen an das Tragrohr heranführbar sind. Die Halbschalen sind beispielsweise durch Laserschneiden aus einem geschlossenen Ring gefertigt worden, so daß sie bei Anlage an das tragrohr nahtlos aneinander stoßenden Flächen der Halbschalen ein Dichtungsmittel aufgetragen, das eine Abdichtung des Innenraumes der Halbschalen gegenüber dem Beflutungsraum ausbildet.

Nach einer nächsten Weiterbildung der Erfindung ist vorgesehen, daß der Außendurchmesser des Ringes 10 mm bis 20 mm kleiner ist als der Innendurchmesser der miteinander zu verschweißenden Rohre. Es hat sich gezeigt, daß bei diesem Abstand zwischen Oberfläche des Verschiebestückes und Bereich, in dem geschweißt wird, eine optimale Beflutung des Schweißbereiches durch das Schutzgas erfolgt. Das Gas wird durch das poröse Material des Verschiebestückes hindurch dem Schweißbereich unmittelbar zugeführt. Zuvor im Schweißbereich vorhandener Sauerstoff wird vollständig und zuverlässig entfernt. Es entsteht eine laminare Schutzgas-Strömung.

Das poröse Material ist vorzugsweise ein gesintertes Metall. Aus diesem kann Schutzgas in einer gleichmäßigen Strömung austreten.

Um auch bei verschiedenen Verschiebestellungen des Verschiebestückes jeweils einen Eintritt des Schutzgases aus dem Tragrohr in das Verschiebestück zu gewährleisten, sieht eine Weiterbildung der Erfindung vor, daß die Austrittsöffnung als Langloch ausgebildet ist, dessen Erstreckung parallel zur Längsmittelachse des Tragrohres ausgerichtet ist. Aufgrund der Ausbildung als Langloch kann das Verschiebestück über den Erstreckungsbereich des Langlochs verschoben werden, ohne daß eine gasleitende Verbindung zwischen Austrittsöffnung und Verschiebestück aufgehoben ist.

Die Dichtungselemente sind vorzugsweise als Dichtscheiben ausgebildet, die an ihrem Umfang zwei umlaufende Dichtlippen aufweisen, deren Wandstärke ausgehend von der jeweiligen Dichtscheibe abnimmt. Dadurch ist gewährleistet, daß auch sie während des Verschweißens von Rohren mit verschiedenen Innendurchmessern einsetzbar sind. Die Dichtscheiben tragen nicht zur Zentrierung der Rohre bei, denn dafür sind die separaten Abstützeinrichtungen vorgesehen. Die Dichtungselemente und insbesondere ihre Dichtlippen der Dichtscheiben können daher aus einem elastischen Material ausgebildet sein, das sich dichtend an die Innenwände der miteinander zu verschweißenden Rohre anschmiegen kann. Diese Anlage ist aufgrund der Elastizität des Materials auch bei Rohren mit voneinander abweichenden Innendurchmessern gewährleistet. Ist auf der Verschiebehülse ein Außengewinde vorgesehen, können Dichtscheiben verwendet werden, die beispielsweise durch Einklemmen zwischen zwei auf der Verschiebehülse angeordneten Muttern ihren Durchmesser verändern. Durch die vorgesehenen zwei umlaufenden Dichtlippen wird jeweils eine zweifache und somit sichere Dichtung erreicht.

Zur weiteren Ausbildung der Erfindung ist schließlich vorgesehen, daß zumindestens in einer Dichtscheibe wenigstens ein Entgasungsdurchbruch angeordnet ist, der mit einem porösen Material verschlossen ist. Durch einen Entgasungsdurchbruch ist ein kontrolliertes Abführen von Schutzgas aus dem Beflutungsraum ermöglicht. Der Durchbruch ist nicht als einfache Durchbohrung ausgebildet, sondern in den Durchbruch ist ein poröses Material, vorzugsweise ein gesintertes Metallstück, eingesetzt. Durch den Entgasungsdurchbruch kann somit nur dann ein Gas aus dem Beflutungsraum abströmen, wenn im Beflutungsraum ein höherer Druck als in der Umgebung des Beflutungsraumes ist. Durch das vorzugsweise gesinterte Material innerhalb des Entgasungsdurchbruches ist somit gewährleistet, daß im Beflutungsraum ein gewisser Staudruck entsteht. Dieser verhindert, daß in den Schweißbereich von außen Sauerstoff vordringen kann.

Es können wenigstens zwei Entgasungsdurchbrüche vorgesehen sein, die ein schnelleres Entgasen des Beflutungsraumes ermöglichen. Insbesondere ist dadurch bei Beginn der Schweißarbeiten gewährleistet, daß nach Einströmungsbeginn des Schutzgas in den Beflutungsraum dort zuvor vorhandener Sauerstoff schnell abgeführt wird.

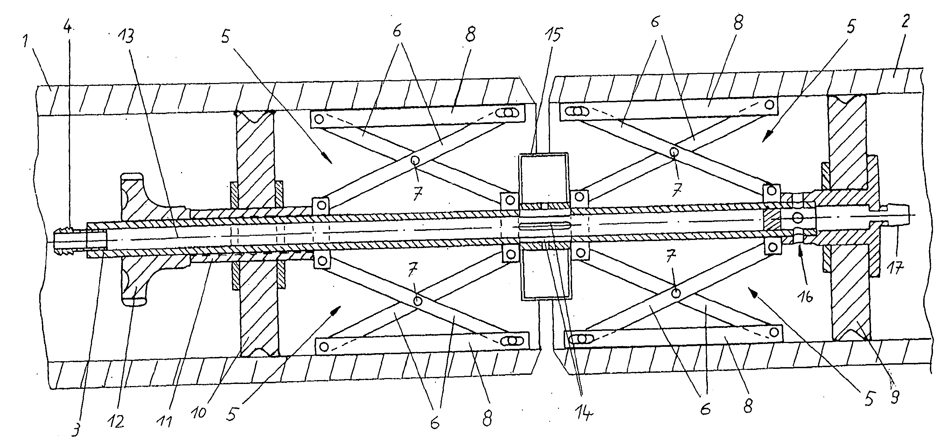

Ein Ausführungsbeispiel der Erfindung, aus dem sich weitere Merkmale ergeben, ist in der Zeichnung dargestellt. Die einzige Figur der Zeichnung zeigt die freien Enden zweier miteinander zu verschweißenden Rohre, in die eine Vorrichtung zur Gasbeflutung eingebracht ist.

Die beiden miteinander zu verschweißenden Rohre 1, 2 sind in einer zueinander koaxialen Ausrichtung angeordnet. Ihre freien Enden sind bis auf einen geringen Abstand einander angenähert.

In die Rohre 1, 2 ist die Vorrichtung zur Gasbeflutung eingebracht. Die Vorrichtung weist ein Tragrohr 3 auf, auf dem einerseits ihre Bauteile angeordnet sind und das andererseits als Gaszuleitung dient. Dazu ist an dem in der Zeichnung links dargestellten freien Ende des Tragrohres 3 ein Gasanschlußstutzen 4 angeordnet.

Die auf dem Tragrohr 3 angeordneten Bauteile umfassen Abstützeinrichtungen zum Abstützen des Tragrohres 3 an den Innenseiten der Rohre 1, 2 sowie Dichtungselemente zum Begrenzen eines Gasbeflutungsraumes.

Jede Abstützeinrichtung ist als Spreizkörper 5 mit jeweils gleichen Abmessungen ausgebildet. Der Spreizkörper 5 umfaßt zwei Spreize 6, die miteinander über ein Gelenk 7 scherenartig verbunden sind. Die Spreize 6 tragen einen als Profil ausgebildeten Spannkörper 8, der mit einer Längsseite flächig gegen die Innenseite eines Rohres 1, 2 angelegt ist.

In der Zeichnung sind vier Spreizkörper 5 dargestellt. Die in einem Abschnitt der Längserstreckung des Tragrohres 3 angeordneten Spreizkörper 5 sind zu einer Gruppe zusammengefaßt, wobei zwei Gruppen von Spreizkörpern 5 vorhanden sind. Dabei ist jeweils eine Gruppe einem der miteinander zu verschweißenden Rohre 1, 2 zugeordnet. Die Spreizkörper 5 ein und derselben Gruppe sind über den Umfang des Tragrohres 3 etwa gleichmäßig verteilt, wobei sie beispielsweise über den Umfang des Tragrohres 3 in Abständen von 120° angeordnet sind.

Die Dichtungselemente sind als Dichtscheiben 9, 10 ausgebildet. Jede Dichtscheibe 9,10 weist an ihrem Außenumfang zwei umlaufende Dichtlippen auf, deren Wandstärke ausgehend von der Dichtscheibe 9, 10 abnimmt. Die Dichtscheibe 9 ist auf dem Tragrohr 3 befestigt. Sie dient als Widerlager bzw. Anschlag für die Spreizkörper 5, die auf dem Tragrohr 3 jeweils verschiebbar angeordnet sind. Die gegenüberliegende Dichtscheibe 10 ist auf einer Verschiebehülse 11 angeordnet, die über einen Drehgriff 12 in definierter Weise auf dem Tragrohr 3 verschiebbar ist. Durch ein Verschieben der Verschiebehülse 11 in Richtung der Dichtscheibe 9 werden die Spreize 6 der Spreizkörper 5 zueinander in ihrer Winkellage derart verändert, daß sich der Abstand zwischen jedem Spannkörper 8 und dem Tragrohr 3 vergrößert. Während dieser Vergrößerung legen sich die Spannkörper 8 an die Innenseite der Rohre 1, 2 an und zentrieren diese somit auf die Längsmittelachse 13 des Tragrohres 3. Die Spreize 6 und die Spannkörper 8 sind aus Stahl gefertigt.

Neben diesem Zentrieren dient die Vorrichtung zugleich zum Zuführen eines Schutzgases in den von den Dichtscheiben 9, 10 begrenzten Raum innerhalb der Rohre 1, 2. Das über den Gasanschlußstutzen 4 in das Innere des Tragrohres 3 eingeführte Schutzgas kann dabei über Austrittsöffnungen 14 aus dem Tragrohr 3 in den zu beflutenden Raum austreten. Das Gas tritt dabei nicht direkt in den Raum aus, sondern zunächst in ein als Ring 15 ausgebildetes Verschiebestück aus einem porösem Material, vorzugsweise aus einem Sinter-Metall. Der Ring 15 weist bei dem Ausführungsbeispiel einen etwa quadratischen Querschnitt auf, und ist durch ein Betätigen der Verschiebehülse 11 auf dem Tragrohr 3 verschiebbar. Die Austrittsöffnungen 14 sind dabei als Langlöcher ausgebildet, deren Erschreckung parallel zur Längsmittelachse 13 des Tragrohres 3 verläuft. Dadurch ist sichergestellt, daß auch bei einem Verschieben des Ringes 15 eine gasleitende Verbindung zwischen den Austrittsöffnungen 14 und dem Inneren des Ringes 15 gewährleistet ist. Das Schutzgas tritt aus dem Ring 15 in den Beflutungsraum aus und wird durch im Bereich der Dichtscheiben 9 angeordnete Durchbrüche 16 in einen gasdicht abgegrenzten Abschnittes des Tragrohres 3 zurückgeführt. Aus diesem Abschnitt ist das Schutzgas über das freie Ende des Tragrohres 3 abführbar, wobei dem freien Ende ein Abströmkörper 17 zugeordnet ist. Dieser ist gleichfalls aus einem porösem Material gefertigt, damit in dem Beflutungsraum ein Staudruck gewährleistet ist.

Wenigstens einer Dichtscheibe 9, 10 kann ein nicht weiter dargestellter Entgasungsdurchbruch zugeordnet sein, durch den gleichfalls Gas aus dem Beflutungsraum abführbar ist.

## Patentansprüche

1. Vorrichtung zur Gasbeflutung von zwei miteinander zu verschweißenden Rohren mit einem in den Rohren anordbaren Körper mit wenigstens einer Austrittsöffnung für das Gas, an den zumindestens eine Gaszuführung anschließbar ist und der einen Beflutungsraum begrenzende Dichtungselemente aufweist, wobei der Körper von den Dichtungselementen separate Abstützeinrichtungen zu seinem Abstützen an den Innenseiten der Rohre (1, 2) aufweist, jede Abstützeinrichtung zumindestens ein an die Innenseite des Rohres (1, 2) anlegbares Anlageelement aufweist, das mit einem Halteelement an dem Körper gehalten ist, wobei mit dem Halteelement der Abstand zwischen dem Anlageelement und dem Körper veränderbar ist,
**dadurch gekennzeichnet,**
**daß** jede Abstützeinrichtung durch einen Spreizkörper (5) ausgebildet ist, wobei ein Spannkörper (8) das Anlageelement ausbildet und wobei Spreize (6) das Halteelement ausbilden und
**daß** der Körper als Tragrohr (3) ausgebildet ist, dessen Durchmesser geringer als der Innendurchmesser der miteinander zu verschweißenden Rohre (1, 2) ist und dessen wenigstens einem Ende ein Anschlußelement für die Gaszuführung zugeordnet ist, und daß auf dem Außenumfang des Tragrohres (3) die Spreizkörper (5) und die Dichtungselemente angeordnet sind,
**daß** die Spreizkörper (5) in zwei Gruppen eingeteilt sind, wobei die Spreizkörper (5) ein und derselben Gruppe über den Umfang des Körpers verteilt angeordnet sind und wobei die Spreizkörper (5) gleich dimensioniert sind, daß zwischen den beiden Gruppen der Spreizkörper (5) ein Verschiebestück auf dem Tragrohr (3) angeordnet ist, diesem Verschiebestück zumindest abschnittsweise aus porösem Material gefertigt ist und die wenigstens eine Austrittsöffnung (14) für das Gas in dem diesem Verschiebestück zugeordneten Bereich des Tragrohres (3) angeordnet ist, wobei an einem freien Ende des Tragrohres (3) ein erstes Dichtungselement befestigt ist, gegen dieses Dichtungselement die Spreizkörper (5) haltend angelegt sind und auf der diesem Dichtungselement abgekehrten Seite der Spreizkörper (5) auf dem Tragrohr (3) eine Verschiebehülse (11) angeordnet ist und wobei das Verschiebestück durch ein Betätigen der Verschiebehülse (11) auf dem Tragrohr (3) verschiebbar ist.

2. Vorrichtung nach Anspruch 1, **dadurch gekennzeichnet, daß** die Verschiebehülse (11) ein Innengewinde aufweist und daß das Tragrohr (3) in dem der Verschiebehülse zugeordneten Bereich ein Außengewinde aufweist.

3. Vorrichtung nach Anspruch 1 oder 2, **dadurch gekennzeichnet, daß** die Verschiebehülse (11) ein Außengewinde aufweist und daß auf der Verschiebehülse ein zweites Dichtungselement angeordnet ist.

4. Vorrichtung nach einem der vorhergehenden Ansprüche, **dadurch gekennzeichnet, daß** jede Gruppe drei Spreizkörper (5) umfaßt, die in Abständen von etwa 120° über den Umfang des Tragrohres (3) verteilt sind.

5. Vorrichtung nach einem der vorhergehenden Ansprüche, **dadurch gekennzeichnet, daß** das Verschiebestück als Ring (15) ausgebildet ist, der auf das Tragrohr (3) aufgeschoben ist.

6. Vorrichtung nach Anspruch 5, **dadurch gekennzeichnet, daß** der Ring (15) aus zwei Halbschalen ausgebildet ist.

7. Vorrichtung nach Anspruch 5 oder 6, **dadurch gekennzeichnet, daß** der Außendurchmesser des Rings (15) 10 bis 20 mm kleiner ist als der Innendurchmesser der miteinander zu verschweißenden Rohre (1, 2).

8. Vorrichtung nach einem der vorhergehenden Ansprüche, **dadurch gekennzeichnet, daß** das poröse Material ein gesintertes Metall ist.

9. Vorrichtung nach einem der vorhergehenden Ansprüche, **dadurch gekennzeichnet, daß** die Austrittsöffnung (14) für das Gas als Langloch ausgebildet ist, dessen Erstreckung parallel zur Längsmittelachse (13) des Tragrohres (3) ausgerichtet ist.

10. Vorrichtung nach einem der vorhergehenden Ansprüche, **dadurch gekennzeichnet, daß** jedes Dichtungselement als Dichtscheibe (9, 10) ausgebildet ist, die an ihrem Umfang zwei umlaufende Dichtlippen aufweist, deren Wandstärke ausgehend von der Dichtscheibe (9, 10) abnimmt.

11. Vorrichtung nach Anspruch 10, **dadurch gekennzeichnet, daß** zumindestens in einer Dichtscheibe (9, 10) wenigstens ein Entgasungsdurchbruch angeordnet ist, der mit einem porösen Material verschlossen ist.

## Claims

1. Device for gas-flooding two tubes to be welded together with a body that can be positioned in the tubes with at least one escape opening for the gas, to which at least one gas feed can be attached and which has sealing elements demarcating a flooding chamber, wherein the body has separate supporting devices from the sealing elements to its supports on the inner sides of the tubes (1, 2), each supporting device has at least one attachment element that can be attached to the inner side of the tube (1, 2), which is held on the body with a holding element, wherein the distance between the attachment element and the body is adjustable with the holding element,
**characterized in that**
each supporting device is constructed using an expansion body (5), wherein a clamping body (8) forms the attachment element and wherein expanders (6) form the holding element and
that the body is constructed as a support tube (3), the diameter of which is smaller than the internal diameter of the tubes (1, 2) to be welded together and to at least one end of which an attachment element for the gas supply is attached, and that the expansion bodies (5) and the sealing elements are arranged on the external circumference of the support tube (3),
that the expansion bodies (5) are divided into two groups, wherein the expansion bodies (5) of one and the same group are arranged over the circumference of the body and wherein the expansion bodies (5) are dimensioned equally, that between the two groups of the expansion bodies (5) a displacement piece is arranged on the support tube (3), this displacement piece is made at least in some sections from porous material and the at least one escape opening (14) for the gas is arranged in the region allocated to this displacement piece of the support tube (3), wherein a first sealing element is fixed on a free end of the support tube (3), the expansion bodies (5) are held abutted to this sealing element and on the side of the expansion bodies (5) turned away from this sealing element on the support tube (3) a displacement sleeve (11) is arranged, and wherein the displacement piece can be displaced on the support tube (3) by activation of the displacement sleeve (11).

2. Device according to claim 1, **characterized in that** the displacement sleeve (11) contains an internal thread and the support tube (3) contains an external thread in the region allocated to the displacement sleeve.

3. Device according to claim 1 or 2, **characterized in that** the displacement sleeve (11) contains an external thread and that a second sealing element is arranged on the displacement sleeve.

4. Device according to one of the foregoing claims, **characterized in that** each group comprises three expansion bodies (5), which are distributed around the circumference of the support tube (3) at intervals of about 120°.

5. Device according to one of the foregoing claims, **characterized in that** the displacement piece is constructed in the form of a ring (15) that is pushed on to the support tube (3).

6. Device according to claim 5, **characterized in that** the ring (15) is constructed from two half-shells.

7. Device according to claim 5 or 6, **characterized in that** the outer diameter of the ring (15) is 10 to 20mm smaller than the internal diameter of the tubes (1, 2) to be welded together.

8. Device according to one of the foregoing claims, **characterized in that** the porous material is a sintered metal.

9. Device according to one of the foregoing claims, **characterized in that** the escape opening (14) for the gas is in the form of a longitudinal hole, the extent of which is aligned parallel to the central longitudinal axis (13) of the support tube (3).

10. Device according to one of the foregoing claims, **characterized in that** each sealing element is constructed as a sealing disc (9, 10), which has two sealing lips encircling its circumference, the wall thickness of which decreases with increasing distance from the sealing disc (9, 10).

11. Device according to claim 10, **characterized in that** at least in one sealing disc (9, 10) at least one degassing opening is arranged, which is closed off with a porous material.

## Revendications

1. Dispositif pour le remplissage en gaz de deux tubes à souder, avec un corps pouvant être placé dans les tubes, possédant au moins une ouverture de sortie pour le gaz, auquel peut être reliée au moins une arrivée de gaz et qui comporte des éléments d'étanchéité limitant une chambre de remplissage, le corps comportant des éléments d'appui séparés des éléments d'étanchéité, pour l'appuyer contre les parois intérieures des tubes (1, 2), chaque élément d'appui comportant au moins un élément d'application pouvant être appliqué sur la paroi intérieure du tube (1, 2) et étant maintenu sur le corps à l'aide d'un élément de maintien, l'espace entre l'élément d'application et le corps étant modifiable avec l'élément de maintien,
**caractérisé en ce que**
chaque élément d'appui est constitué d'un corps expansible (5), un corps de serrage (8) servant à former l'élément d'application et des écarteurs (6) servant à former l'élément de maintien et
**en ce que** le corps est conçu comme un tube de soutien (3), dont le diamètre est inférieur au diamètre intérieur des tubes à souder (1, 2) et dont au moins l'une des extrémités comporte un élément de raccordement pour l'arrivée de gaz, et **en ce que** les corps expansibles (5) et les éléments d'étanchéité sont disposés sur la périphérie externe du tube de soutien (3),
**en ce que** les corps expansibles (5) sont divisés en deux groupes, les corps expansibles (5) d'un même groupe étant répartis sur la périphérie du corps et les corps expansibles (5) étant de la même taille, **en ce qu'**une pièce de déplacement est disposée sur le tube de soutien (3) entre les deux groupes de corps expansibles (5), cette pièce de déplacement étant constituée au moins partiellement d'un matériau poreux, et l'ouverture de sortie (14) pour le gaz est située dans cette région du tube de soutien (3) qui est attribuée à la pièce de déplacement, un premier élément d'étanchéité étant fixé sur une extrémité libre du tube de soutien (3), les corps expansibles (5) étant appliqués par maintien sur cet élément d'étanchéité, une douille de déplacement (11) étant disposée sur le côté du corps expansible (5) qui est opposé à cet élément d'étanchéité sur le tube de soutien (3), la pièce de déplacement pouvant être déplacée par un actionnement de la douille de déplacement (11) sur le tube de soutien (3).

2. Dispositif selon la revendication 1, **caractérisé en ce que** la douille de déplacement (11) comporte un filetage intérieur et **en ce que** le tube de soutien (3) comporte un filetage extérieur dans la région attribuée à la douille de déplacement.

3. Dispositif selon la revendication 1 ou 2, **caractérisé en ce que** la douille de déplacement (11) comporte un filetage extérieur et **en ce qu'**un deuxième élément d'étanchéité est placé sur la douille de déplacement.

4. Dispositif selon l'une des précédentes revendications, **caractérisé en ce que** chaque groupe comprend trois corps expansibles (5), qui sont répartis sur la périphérie du tube de soutien (3) en respectant des écarts de 120°.

5. Dispositif selon l'une des précédentes revendications, **caractérisé en ce que** la pièce de déplacement est conçue comme un anneau (15) coulissé sur le tube de soutien (3).

6. Dispositif selon la revendication 5, **caractérisé en ce que** l'anneau (15) est constitué de deux demi-coquilles.

7. Dispositif selon la revendication 5 ou 6, **caractérisé en ce que** le diamètre extérieur de l'anneau (15) est plus petit de 10 à 20 mm que le diamètre intérieur des tubes à souder (1, 2).

8. Dispositif selon l'une des précédentes revendications, **caractérisé en ce que** le matériau poreux est un métal fritté.

9. Dispositif selon l'une des précédentes revendications, **caractérisé en ce que** l'ouverture de sortie (14) pour le gaz est conçue comme un trou oblong, qui s'étend en parallèle de l'axe médian longitudinal (13) du tube de soutien (3).

10. Dispositif selon l'une des précédentes revendications, **caractérisé en ce que** chaque élément d'étanchéité est conçu comme un disque d'étanchéité (9, 10) comportant sur son pourtour deux lèvres d'étanchéité, dont l'épaisseur de paroi diminue en partant du disque d'étanchéité (9, 10).

11. Dispositif selon la revendication 10, **caractérisé en ce qu'**une percée d'évacuation de gaz est prévue dans au moins un disque d'étanchéité (9, 10), en étant fermée par un matériau poreux.
